Europäisches Patentamt

European Patent Office

Office européen des brevets

(11) Veröffentlichungsnummer: **0 352 464 B1**

(12) **EUROPÄISCHE PATENTSCHRIFT**

(45) Veröffentlichungstag der Patentschrift: **30.12.92**

(21) Anmeldenummer: **89110961.3**

(22) Anmeldetag: **16.06.89**

(51) Int. Cl.⁵: **G01B 11/24**, G01B 11/16, G01M 5/00

(54) Einrichtung zur Messung der Durchbiegung langgestreckter Bauteile.

(30) Priorität: **27.07.88 DE 3825415**

(43) Veröffentlichungstag der Anmeldung:
**31.01.90 Patentblatt 90/05**

(45) Bekanntmachung des Hinweises auf die
Patenterteilung:
**30.12.92 Patentblatt 92/53**

(84) Benannte Vertragsstaaten:
**AT CH ES FR GB IT LI SE**

(56) Entgegenhaltungen:
**WO-A-85/00222**
**DE-A- 2 043 436**

(73) Patentinhaber: **J.M. Voith GmbH**
**Postfach 1940 St. Pöltener Strasse 43**
**W-7920 Heidenheim(DE)**

(72) Erfinder: **Sollinger, Hans-Peter, Dr.**
**Germanenstrasse 74**
**W-7920 Heidenheim(DE)**
Erfinder: **Henning, Johannes**
**Karpfenweg 4**
**W-7922 Herbrechtingen-Bolheim(DE)**

(74) Vertreter: **Weitzel, Wolfgang, Dr.-Ing. et al**
**Friedenstrasse 10**
**W-7920 Heidenheim(DE)**

**Beschreibung**

Die Erfindung betrifft einen langgestreckten Träger entsprechend dem Gattungsbegriff des Patentanspruchs 1.

Langgestreckte Bauteile, insbesondere Tragbalken, vorzugsweise aus Metall in verschiedenen maschinenbaulichen Bereichen, unterliegen oft einer Beanspruchung durch statische Kräfte, andererseits aber auch Beanspruchungen durch thermische Kräfte aufgrund von Temperaturdifferenzen. Letztere führen oft zu starken Verkrümmungen der langgestreckten Bauteile.

Die Aufgabe der Erfindung ist es, das Maß dieser Verkrümmungen bzw. Durchbiegungen festzustellen. Diese Aufgabe wird erfindungsgemäß durch die Merkmale des Patentanspruchs 1 gelöst. In der WO-A-85/00222 wird beispielsweise die Bewegungs- oder Verformungsmessung von Bauwerken mit Hilfe von Laserstrahlen und Sensoranordnungen beschrieben.

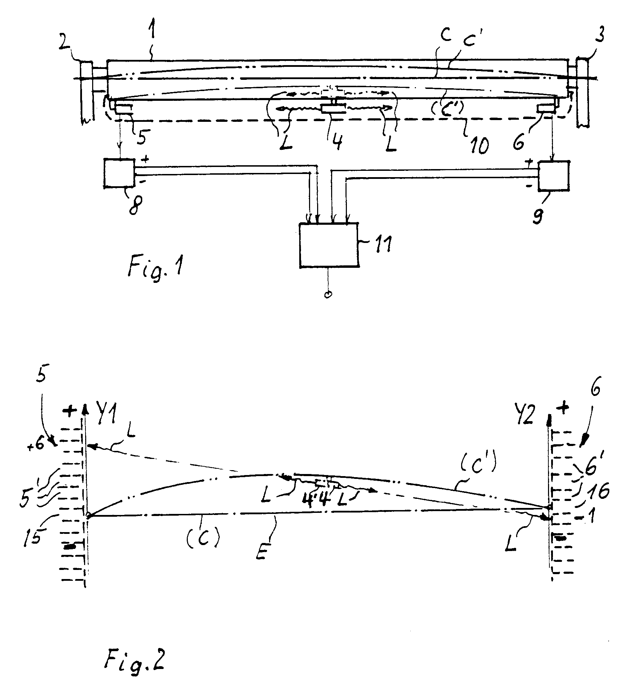

Nachfolgend wird die Erfindung anhand des in der Zeichnung mit Fig. 1 beschriebenen Ausführungsbeispiels sowie der Prinzipskizze der Durchbiegungsverhältnisse nach Fig. 2 erläutert.

Der als langgestrecktes Bauteil skizzierte Balken 1 ist in seitlichen Auflagern 2 und 3 gelagert. Wie skizziert, ist seine gerade, strichpunktiert angegebene Achse C durch mechanische Einflüsse verkrümmt in die doppelpunkt-strichliert angegebene Achse C'. An dem Balken sind über Halter in seiner Mitte, d.h. halben Länge, eine Sendereinheit 4 für elektromagnetische Strahlung oder Licht, einschließlich Laserlicht, sowie an den beiden Enden des Balkens Empfängereinheiten (Aufnehmer 5 und 6) für die elektromagnetische Strahlung oder Licht angebracht. Die elektromagnetische Strahlung oder Licht ist mit den mit L bezeichneten Pfeilen angedeutet. Die Aufnehmer weisen eine Sensorfläche auf, über die nach Art eines Facettenauges Sensorelemente 5' bzw. 6' verteilt sind. Sie vermögen also entsprechend der verkrümmten Mittelachse C' aufgrund der dann vorhandenen Neigung der Strahlen L gegenüber der nicht verkrümmten Mittelachse C den Grad der Verkrümmung der Mittelachse festzustellen. Es kann auch nur jeweils, wie aus Fig. 2 ersichtlich, eine Reihe von Sensorelementen vorhanden sein, wenn die Durchbiegungsebene von vornherein eindeutig feststeht.

Der jeweilige "Null-Sensor" der sich im Ursprung des x-y-Koordinaten-Kreuzes bzw. im Nullpunkt der y-Achse befindet, ist dabei mit 15 bzw. 16 bezeichnet. Der Maßstab in y-Achsrichtung ist hier wesentlich vergrößert im Verhältnis zur Länge entlang der "Null-Sensor-Ebene" E.

Vorzugsweise werden die Meßwerte der verschiedenen, an beiden Enden des langgestreckten Bauteils oder Balkens angeordneten Empfänger addiert und das Ergebnis halbiert. Man erhält so auch für den Fall einer nicht symmetrischen Durchbiegung nach Fig. 2 ein gutes Maß für die wirkliche Durchbiegung. Man benutzt dazu ein Summiergerät 11, das auch als Mittelwert-Bildner ausgebildet sein kann. Hier ist Signal 1 $Y1 = +6$, Signal 2 $Y2 = -1$, also die halbe Summe 2,5.

Vorzugsweise sind die thermischen Beanspruchungen dadurch auszuschließen, daß man den Balken mit Kühlkanälen oder Heizkanälen versieht, die innen oder außen an ihm angebracht sein können. Es ist allerdings so, daß eine geringe örtliche Verwerfung des Balkens im Mittelbereich, wo vorzugsweise der oder die Sender angebracht werden, durch die vorgeschlagene Anordnung im Meßergebnis kompensiert wird. Es kommt zu einer Schiefstellung des Senders aufgrund solcher Verwerfungen (Plattenverwerfung) des Balkens, die aber im wesentlichen zu gleich großen, aber jeweils mit entgegengesetztem Vorzeichen behafteten Meßergebnissen einer vorgetäuschten Auslenkung des Balkens führt, die sich durch die Summierung gegenseitig aufheben.

Als Sensorelement der Aufnehmer 5 und 6 kommen vorzugsweise lichtempfindliche Dioden in Frage und es ist empfehlenswert, daß der Sender 4 bzw. 4' mit Laserlicht arbeitet.

Für einen störungsfreien Betrieb ist natürlich es günstig, die Signaleinrichtungen innerhalb einer Blechabdeckung 10, die an dem langgestreckten Bauteil (Balken) 1 befestigt ist, anzuordnen. Die eine Empfängerschaltung zur Auswertung des Empfängersignals ist mit 8 und die andere Empfängerschaltung mit 9 angedeutet. Die Sender für Laserlicht werden von der Firma Raytec AG, Chur/Schweiz, Roßbodenstraße, unter der Bezeichnung Laser-Richtmeßgerät geliefert. Die Konstruktion von Tragbalken für Streicheinrichtungen geht z.B. aus US-PS 4,512,279 hervor.

**Patentansprüche**

1. Langgestreckter Träger, für die Schaberklinge einer Papier-Streicheinrichtung oder für die Oberlippe eines Papiermaschinen-Stoffauflaufs, der insbesondere an beiden Enden abgestützt ist, mit einer Einrichtung zur Messung der Durchbiegung des langgestreckten Trägers, enthaltend die folgenden Merkmale:

    a) es sind mindestens drei Signaleinheiten, nämlich mindestens eine Sendereinheit (4) und zwei Empfängereinheiten (5, 6) in derselben Achsflucht des Trägers (1) vorhanden, wobei jede Empfängereinheit (5, 6) nur aus einer Richtung in bezug auf die Enden des Trägers ein Sendersignal erhält;

    b) jede Sendereinheit (4) ist eingerichtet zum Aussenden eines Signales in Form eines scharf gebündelten Energiestrahles, z.B. Laserstrahles;

c) jede der Empfängereinheiten (5, 6) hat eine Vielzahl von Sensoren, die in mindestens einer Reihe angeordnet sind, wobei sich die Reihe in der Richtung der Durchbiegung des Trägers erstreckt;

d) von den Signaleinheiten sind je eine an den beiden Enden und die anderen im Mittelbereich des Trägers (1) so angeordnet, daß jede Empfängereinheit ein gesondertes Sendersignal erhält, wobei die Sendereinheiten (4) derart mit dem Träger (1) verbunden sind, daß die Strahlen im wesentlichen parallel zur Längsachse des Trägers im Mittelbereich desselben verlaufen;

e) jede Empfängereinheit weist lichtempfindliche Sensoren auf;

f) die Anordnung ist derart getroffen, daß beim Zustand "Durchbiegung Null" jedes der je Empfängereinheit (5, 6) gesendeten Signale von einem "Null-Sensor" der jeweiligen Empfängereinheit (5, 6) empfangen wird, und daß im Maße der Entfernung des jeweiligen vom Sendersignal erregten Sensors vom "Null-Sensor" die jeweilige Empfängereinheit (5, 6) bzw. die Empfängerschaltung (8, 9) ein entsprechend höheres Signal (Y1 bzw. Y2) abgibt,

g) die Empfängerschaltung (8, 9) weist einen Summierer zur Bildung der Summe der Signale (Y1 und Y2 bzw. X1 und X2) oder einen Mittelwert-Bildner, zur Bildung der halben Summe der Signale (Y1 und Y2 bzw. X1 und X2) auf.

2. Langgestreckter Träger nach Anspruch 1, dadurch gekennzeichnet, daß je eine Sendereinheit und Empfängereinheit zusammenwirken, wobei die Sendereinheiten im Mittelbereich des Trägers (1) Rücken an Rücken angeordnet sind.

3. Langgestreckter Träger nach Anspruch 1 oder 2, dadurch gekennzeichnet, daß jede Empfängereinheit (5, 6) nach Art eines Facettenauges mehrere nebeneinanderliegende Reihen von Sensoren aufweist.

4. Langgestreckter Träger nach Anspruch 3, dadurch gekennzeichnet, daß mindestens in zwei zueinander senkrechten Ebenen Empfängerelemente oder Reihen von solchen angeordnet sind.

**Claims**

1. An elongated support member for the shaving blade of a paper coating device or for the upper lip of a headbox of a paper making machine, which is more particularly supported at both ends, comprising a device for measurement of the flexure of the elongated support member having the following features:

a) at least three signal units are present, that is to say at least one transmitter unit (4) and two receiver units (5 and 6) in the same axially aligned part of the support member (1), each receiver unit (5 and 6) only receiving a signal from one direction in relation to the ends of the support member;

b) each transmitting unit (4) is adapted for the transmission of a signal in the form of a sharply collimated energy ray, for instance of laser light;

c) each of the receiver units (5 and 6) comprises a plurality of sensors which are arranged in at least one row, the row extending in the direction of the flexure of the support member;

d) of the signal units one respective one is arranged at the two ends and the other is so arranged one in the center part of the support member (1) that each receiver unit receives a separate transmitted signal, the transmitter units (4) being so connected with the support member that the rays extend essentially in parallelism to the longitudinal axis of the support member in the center part thereof;

e) each receiver unit has light-sensitive sensors;

f) the arrangement is such that in the "zero flexure" condition each of the signals transmitted to each receiver unit (5 and 6) is received by a "zero sensor" of the respective receiver unit (6 and 6) and in that with an increase in the distance of the respective sensor excited by the transmitted signal from the "zero sensor" the respective receiver unit (5 and 6) or respectively the receiver circuit (8 and 9) supplies a correspondingly higher signal (Y1 and, respectively, Y2); and

g) the receiver circuit (8 and 9) has a summating device for the formation of the sum of the signals (Y1 and Y2 and, respectively, X1 and X2) or a device for deriving an average to constitute half the sum of the signals (Y1 and Y2 and, respectively, X2).

2. The elongated support member as claimed in claim 1, characterized in that each respective transmitter unit and receiver unit are in cooperation, the transmitter units being arranged in the center part of the support member (1) back to back.

3. The elongated support member as claimed in claim 1 or claim 2, characterized in that each receiver device (5 and 6) has a plurality of adjacently arranged rows of sensors like a facette eye.

4. The elongated support member as claimed in claim 3, characterized in that receiver elements are arranged in at least two mutually perpendicular planes or rows of such planes.

**Revendications**

1. Support à longue portée pour la lame de racle d'un dispositif d'enduction de papier ou pour la lèvre supérieure de la sortie de pâte d'une caisse de tête de machine à papier, qui s'appuie notamment à chaque extrémité, avec un dispositif de mesure de la flexion du support à longue portée qui a les caractéristiques suivantes:

a) il existe au moins trois unités de signalisation, à savoir au moins une unité émettrice (4) et deux unités réceptrices (5, 6) dans le même alignement d'axe du support (1), chaque unité réceptrice (5, 6) ne recevant un signal de l'émetteur que d'une direction vers les extrémités du support;

b) chaque unité d'émission (4) est aménagée pour émettre un signal sous forme d'un rayon d'énergie à faisceau étroit, par exemple un rayon laser;

c) chacune des unités de réception (5, 6) a un grand nombre de capteurs, qui sont disposés au moins sur une rangée, la rangée s'étendant dans le sens de la flexion du support;

d) des unités de signaux, chacune est placée aux deux extrémités et l'autre au milieu, de sorte que chaque unité de réception reçoit un signal particulier de l'émetteur, les unités émettrices (4) étant liées au support (1) de telle sorte que les rayons s'étendent essentiellement parallèlement à l'axe longitudinal du support dans son domaine médian;

e) chaque unité réceptrice présente des capteurs sensibles à la lumière;

f) l'implantation est réalisée de telle façon, qu'à l'état "flexion nulle", chacun des signaux envoyés par unité de réception (5, 6) est reçu par un "capteur zéro" de chaque unité de réception (5, 6) et qu'en fonction de l'éloignement de chaque capteur excité par le signal de l'émetteur, depuis le "capteur zéro" chaque unité réceptrice (5, 6) ou circuit de récepteur (8, 9) émet un signal approprié plus élevé (Y1 ou Y2);

g) le circuit de réception (8, 9) présente un sommateur pour former la somme des signaux (Y1 et Y2 ou X1 et X2) ou un calculateur de moyenne, pour former la demi-somme des signaux (Y1 ou Y2 ou X1 et X2).

2. Support à longue portée selon la revendication 1, caractérisé en ce que chaque unité émettrice et chaque unité réceptrice coopèrent, les unités émettrices étant placées dos à dos dans le domaine médian du support (1).

3. Support à longue portée selon la revendication 1 ou 2, caractérisé en ce que chaque unité réceptrice (5, 5) présente plusieurs rangées juxtaposées de capteurs comme une espèce d'yeux à facettes.

4. Support à longue portée selon la revendication 3, caractérisé en ce qu'on dispose au moins dans deux plans perpendiculaires entre eux des éléments récepteurs ou des rangées de tels éléments.

Fig. 1

Fig.2